# EUROPÄISCHE PATENTANMELDUNG

(11) **EP 1 530 380 A1**
(43) Veröffentlichungstag der Anmeldung: **11.05.2005**
(21) Anmeldenummer: 03025745.5
(22) Anmeldetag: 10.11.2003
(51) Int. Cl.: H04Q 7/22

(54) **Verfahren zum Bereithalten einer Nachricht für einen Empfänger dem Empfänger**

(71) Anmelder: SIEMENS AKTIENGESELLSCHAFT, 80333 München (DE)
(72) Erfinder: Gierke, Hartmut, 38259 Salzgitter (DE); Laumen, Josef, 31142 Hildesheim (DE); Schmidt, Andreas, 38114 Braunschweig (DE)

(57) **Zusammenfassung**

Zum Bereithalten einer Nachricht für einen Empfänger dem Empfänger wird mittels einer ersten Notifikations-Nachricht signalisiert, dass eine Nachricht für den Empfänger bereitgehalten wird. Die erste Notifikations-Nachricht enthält ein Informationselement, das eine erste Nachrichten-Gültigkeitsdauer beschreibt. Der Empfänger wird mittels einer zweiten Notifikations-Nachricht über das Erlöschen der bereitgehaltenen Nachricht informiert.

## Beschreibung

Die Erfindung betrifft ein Verfahren zum Bereithalten einer Nachricht für einen Empfänger, einen entsprechend eingerichteten Empfänger, eine entsprechend eingerichtete Servereinrichtung und ein entsprechend eingerichtetes Kommunikationssystem.

Das Mobilfunksystem GSM (GSM - Global System for Mobile Communications) bietet neben der Sprachtelefonie auch die Möglichkeit mittels SMS (SMS - Short Message Service, [1]) kurze Textnachrichten von bis zu 160 Zeichen Länge zu versenden bzw. zu empfangen.

Als Nachfolger dieses überaus erfolgreichen Dienstes wird derzeit MMS (MMS - Multimedia Messaging Service, [2] und [3]) gehandelt. Dieser Dienst ermöglicht das mobile Versenden und den mobilen Empfang von Nachrichten mit multimedialen Inhalten, die im Folgenden als MMs bezeichnet werden (MM - Multimedia Message). Im Gegensatz zum SMS entfällt bei MMS die Beschränkung auf reine Textinhalte von 160 Zeichen Länge: eine MM kann aus mehreren MM-Elementen von unterschiedlichen Dateitypen (z.B. Audio oder Standbild) und Dateiformaten (bei Standbild z.B. GIF oder JPEG) bestehen, selbst ein zeitlich festgelegter Ablauf von kleinen Präsentationen wird ermöglicht.

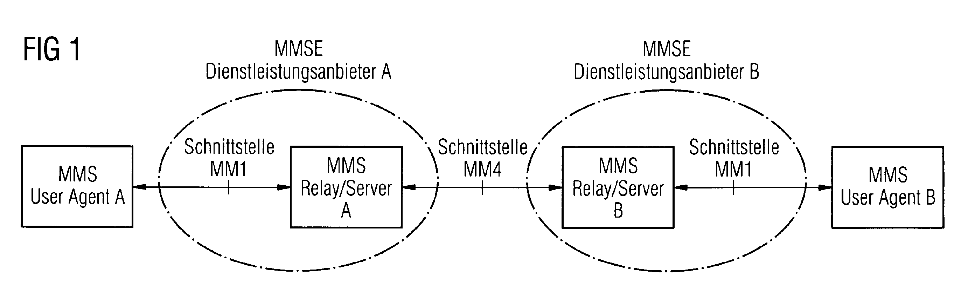

In Figur 1 ist die MMS Netzwerk-Architektur nach heutigem Stand der Technik aus Sicht von 3GPP (3GPP - 3^{rd} Generation Partnership Project) dargestellt. Unter MMS User Agent versteht man ein Software-Programm beispielsweise auf einem Mobilfunkgerät oder auf einem an ein Mobilfunkgerät angeschlossenen Gerät (z.B. Laptop, o.ä.), das MMS realisiert. Ein MMS Relay/Server ist ein Netzwerkelement, das im Zuständigkeitsbereich MMSE (MMSE - Multimedia Messaging Service Environment) eines MMS-Dienstleistungsanbieters (MMS Providers) den MMS User Agents die MMS-Funktionalität zur Verfügung stellt.

Ein charakteristisches Merkmal von MMS ist, daß bei der Zustellung von MMs an das Empfangsgerät zwischen dem sogenannten PUSH-Modus, bei dem eine ankommende MM unverzüglich vom MMS Relay/Server an das MMS User Agent des Empfängers übertragen wird, und dem sogenannten PULL-Modus, bei dem der Empfänger zunächst über eine neu eingetroffene MM mittels einer MMS-Empfänger-Benachrichtigung ("MMS Notification") informiert wird und daraufhin selbst entscheiden kann, ob bzw. wann er diese MM auf sein Telekommunikations-Endgerät herunterlädt, unterschieden wird.

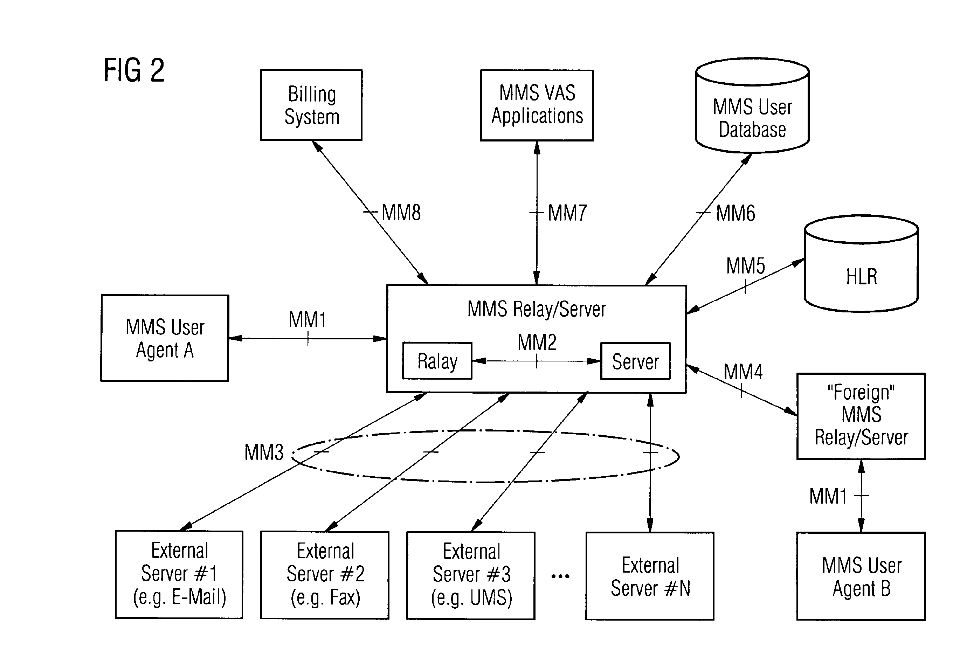

Die in 3GPP definierten Schnittstellen zum Anschluß weiterer Netzwerkelemente an einen MMS Relay/Server nach heutigem Stand der Technik zeigt Figur 2. Neben der Schnittstelle MM1, über die das MMS User Agent und der MMS Relay/Server miteinander in Verbindung stehen, können über die Schnittstellen MM3 beliebige externe Server, wie zum Beispiel e-mail Server, Fax Server, etc. an einen MMS Relay/Server angeschlossen werden. Die Anbindung fremder MMS-Dienstleistungs-anbieter (MMS Provider) wird über die Schnittstelle MM4 realisiert. Die Schnittstelle MM5 verbindet den MMS Relay/Server mit dem HLR (HLR - Home Location Register) des Mobilfunk-Netzbetreibers, in dem die individuellen Kundendaten eines jeden Mobilfunkteilnehmers gespeichert sind (Das HLR befindet sich in der Regel im Zuständigkeitsbereich des Netzbetreibers, der nicht zwangsläufig mit dem MMS-Dienstleistungsanbieter identisch sein muß). Den Anschluss einer oder mehrerer MMS User Data Base(s) gestattet die Schnittstelle MM6. Über die Schnittstelle MM7 wird der Anschluß von Servern ermöglicht, die von einem VASP (VASP - Value Added Service Provider) betrieben werden und den MMS-Nutzern Mehrwertdienste zur Verfügung stellen. Schließlich existiert noch eine weitere Schnittstelle MM8 zum Anschluß einer Netzwerkeinheit an den MMS Relay/Server, in der alle relevanten Informationen zum Vergebühren des MMS gesammelt und ausgewertet werden.

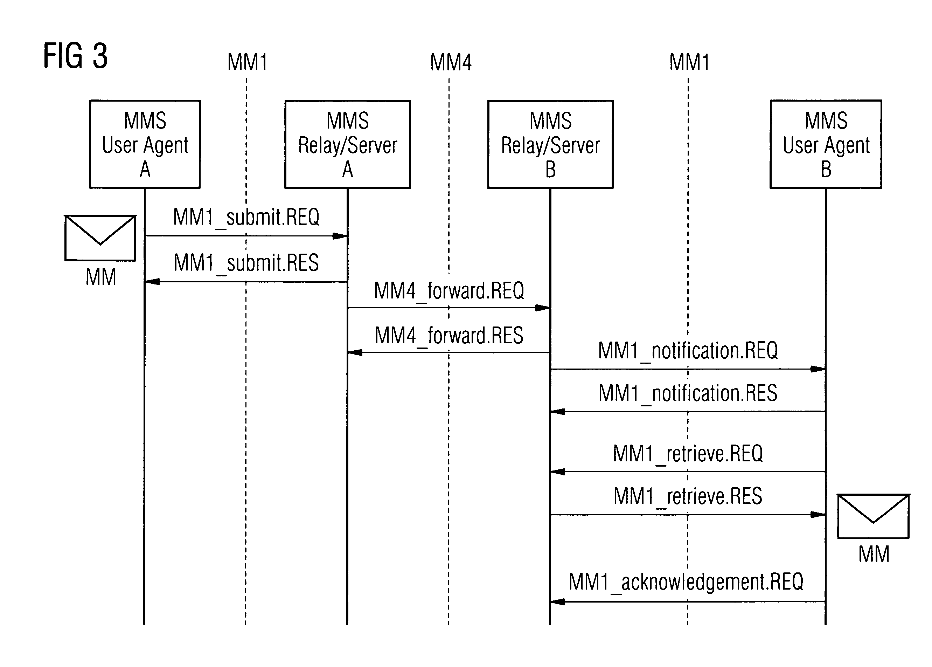

Im Folgenden wird der Austausch von Daten zwischen den oben vorgestellten Datenübertragungseinheiten MMS User Agent und MMS Relay/Server beim Versenden und Empfangen einer MM anhand der in [3] definierten so genannten 3GPP abstract messages genauer beschrieben. Eine abstract message besteht aus mindestens einem information element (in Deutsch: Kopf-Feld). Im MMS kann der Absender MMS User Agent A eine MM über die (Luft-)Schnittstelle MM1 an den MMS Relay/Server A seines MMS-Dienstleistungsanbieters mit der abstract message MM1_submit.REQ schicken. Der MMS Relay/Server A bestätigt den korrekten Empfang der MM von MMS User Agent A mit der abstract message MM1_submit.RES. Die Übertragung der MM an den MMS Relay/Server B im MMSE B des Empfängers geschieht mit dem abstract message Paar MM4_forward.REQ (enthält die MM) und MM4_forward.RES (Rückmeldung). Danach wird der Empfänger MMS User Agent B über die zum Herunterladen bereitliegende MM mit der abstract message MM1_notification.REQ (erste Notifikations-Nachricht) informiert. In dieser MMS-Empfänger-Benachrichtigung ist eine Referenz auf den Speicherplatz der MM im MMSE B des Empfängers in Form eines URI (URI - Uniform Resource Identifier) enthalten. Die abstract message MM1_notification.RES dient vorrangig als Bestätigung für den korrekten Empfang der MMS-Empfänger-Benachrichtigung am MMS User Agent B, aber auch dazu, dem MMS-Dienstleistungsanbieter B des Empfängers die Art der gewünschten Zustellung (PUSH- oder PULL-Modus) mitzuteilen. Mit der abstract message MM1_retrieve.REQ kann der Empfänger MMS User Agent B das Herunterladen einer auf dem MMS Relay/Server B bereitliegenden MM initiieren. Die Zustellung der MM vom MMS Relay/Server B an das MMS User Agent B erfolgt mittels der abstract message MM1_retrieve.RES. Der MMS Relay/Server B kann mit der abstract message MM1_acknowledgement.REQ vom MMS User Agent B über den Ausgang des Herunterladens der MM informiert werden. Abbildung 3 zeigt das sogenannte Transaction Flow Diagramm nach 3GPP, in dem die in [3] definierten abstract messages dargestellt sind.

Der Absender MMS User Agent A kann (optional) vor dem Versenden die Gültigkeit seiner MM entweder absolut (z.B. "gültig bis 26.08.2003, 15:00 Uhr UTC") oder relativ (z.B. "Gültigkeitsdauer: 2h-30min-15sec") angeben. Mit der MMS-Empfänger-Benachrichtigung erhält der Empfänger MMS User Agent B Kenntnis über die vom Absender oder MMS-Dienstleistungsanbieter vergebene Gültigkeit der MM (obligatorisch). Im PULL-Modus muß die MM nach [2] im Zuständigkeitsbereich MMSE B des Empfängers bis zum Ablauf der Gültigkeit für das mögliche Abrufen durch den Empfänger MMS User Agent B bereitgehalten (d.h. gespeichert) werden.

Problematisch ist hierbei die Tatsache, daß nicht davon ausgegangen werden kann, daß die Uhr im Telekommunikations-Endgerät des Empfängers (MMS User Agent B) synchron mit der Uhr des MMS Dienstleistungsanbieters läuft:
1.Möglicherweise kommt es aufgrund fehlerhafter Einstellungen des Benutzers (beispielsweise hervorgerufen durch die Umstellung zwischen Sommerzeit und Winterzeit) oder hervorgerufen durch Abweichungen während des laufenden Betriebes zu Asynchronität.
2. Im MMS tauscht der MMS User Agent auch im Roaming-Fall immer mit demselben MMS Relay/Server (der im Normalfall im Heimatland des Benutzers steht) die 3GPP abstract messages in der oben beschriebenen Art und Weise aus. Dies ist ein wesentlicher Unterschied zu SMS, wo der Nutzer im Roaming-Fall mit einem anderen als seinem Heimat-SMSC (SMSC - Short Message Service Center) in Verbindung steht. Folglich kann Asynchronität zwischen den Uhren auch im Roaming-Fall auftreten, beispielsweise wenn ein Kunde, der mit seinem mobilen Telekommunikations-Endgerät in einem fremden PLMN (V-PLMN - Visited Public Land Mobile Network, "besuchtes" Mobilfunknetzwerk) im Ausland eingebucht ist, die Uhr seines Endgerätes für die Dauer seines Auslandsaufenthaltes der entsprechenden Zeitzone anpaßt.

Die obigen Beispiele beschreiben sehr deutlich mögliche Szenarien, bei denen ein Zugriffsversuch des Empfängers MMS User Agent B auf eine MM (mittels der abstract message MM1_retrieve.REQ) vom MMS-Dienstleistungsanbieter möglicherweise nicht positiv beantwortet werden kann (d.h. die abstract message MM1_retrieve.RES enthält die gewünschte MM nicht). Dieses Problem tritt genau dann ein, wenn auf die MM aufgrund einer Asynchronität zwischen der Uhr im Netzwerk und der Uhr im Telekommunikations-Endgerät erst nach Ablauf ihrer Gültigkeit zugegriffen wird, weil der MMS-Dienstleistungsanbieter die MM zu diesem Zeitpunkt bereits gelöscht haben dürfte.

Im MMS erhält der Empfänger also zunächst eine MMS-Empfänger-Benachrichtigung, mit der ihm das Bereitliegen einer neu eingetroffenen MM inklusive deren Gültigkeit angekündigt wird. Unter bestimmten Umständen (siehe oben) kann ein Zugriffsversuch des Empfängers - selbst innerhalb der ihm angezeigten Gültigkeit - nicht erfolgreich ausgeführt werden, weil der MMS-Dienstleistungsanbieter die MM bereits gelöscht hat. Dieses Service-Verhalten ist zutiefst problematisch und wird beim Empfänger sicherlich auf Unverständnis stoßen.

Der Erfindung liegt daher auch die Aufgabe zugrunde, eine technische Lehre zum Bereithalten einer Nachricht für einen Empfänger anzugeben, mit der eine Nutzer zuverlässiger über das Erlöschen einer bereitgehaltenen Nachricht informiert wird.

Diese Aufgabe wird durch die Merkmale des unabhängigen Anspruchs gelöst. Vorteilhafte und zweckmäßige Weiterbildungen ergeben sich aus den abhängigen Ansprüchen. Es liegen dabei auch Weiterbildungen der Vorrichtungsansprüche im Rahmen der Erfindung, die den abhängigen Ansprüchen des Verfahrensanspruchs entsprechen.

Erfindungsgemäß wird also zum Bereithalten einer Nachricht für einen Empfänger dem Empfänger mittels einer ersten Notifikations-Nachricht signalisiert wird, dass eine Nachricht für den Empfänger bereitgehalten wird. Die erste Notifikations-Nachricht enthält ein Informationselement, das insbesondere eine erste Nachrichten-Gültigkeitsdauer beschreibt. Der Empfänger wird mittels einer zweiten Notifikations-Nachricht über das Erlöschen der bereitgehaltenen Nachricht informiert.

Die Nachricht kann dabei eine Multimedia-Nachricht sein. Der Empfänger kann ein Mobiltelefon oder eine dem Mobiltelefon zugeordnete Einheit bzw. Agent sein. Die Nachricht kann netzwerkseitig insbesondere in einer Servereinrichtung bereitgehalten werden. Die Notifikations-Nachrichten können von einer der Servereinrichtung zugeordneten oder einer mit einer Servereinrichtung in Verbindung stehenden Sendeeinrichtung an den Empfänger gesendet werden.

Die Erfindung wird im Folgenden anhand bevorzugter Ausführungsbeispiele näher beschrieben, zu deren Erläuterung nachstehend aufgelistete Figur dient:
Figur 1: MMS Netzwerk-Architektur mit zwei MMSEs nach 3GPP;
Figur 2: Schnittstellen eines MMS Relay/Servers nach 3GPP;
Figur 3: beispielhaftes Nachrichtenflussdiagramm nach 3GPP: MMS User Agent A verschickt eine MM an MMS User Agent B;
Figur 4: beispielhaftes Nachrichtenflussdiagramm nach OMA (OMA - Open Mobile Alliance);
Figur 5-A: beispielhaftes Nachrichtenflussdiagramm nach OMA mit erweiterter Verwendung eines OMA MMS PDU Paares M-Notification.ind und M-NotifyResp.ind nach Lösungsvariante 1-A;
Figur 5-B: beispielhaftes Nachrichtenflussdiagramm nach OMA mit erweiterter Verwendung eines OMA MMS PDU Paares M-Notification.ind und M-NotifyResp.ind nach Lösungsvariante 1-B;
Figur 6: beispielhaftes Nachrichtenflussdiagramm nach OMA mit neu definierten MMS PDUs M-ExpiryNotification.ind und M-ExpiryNotifyResp.ind nach Lösungsvariante 2;

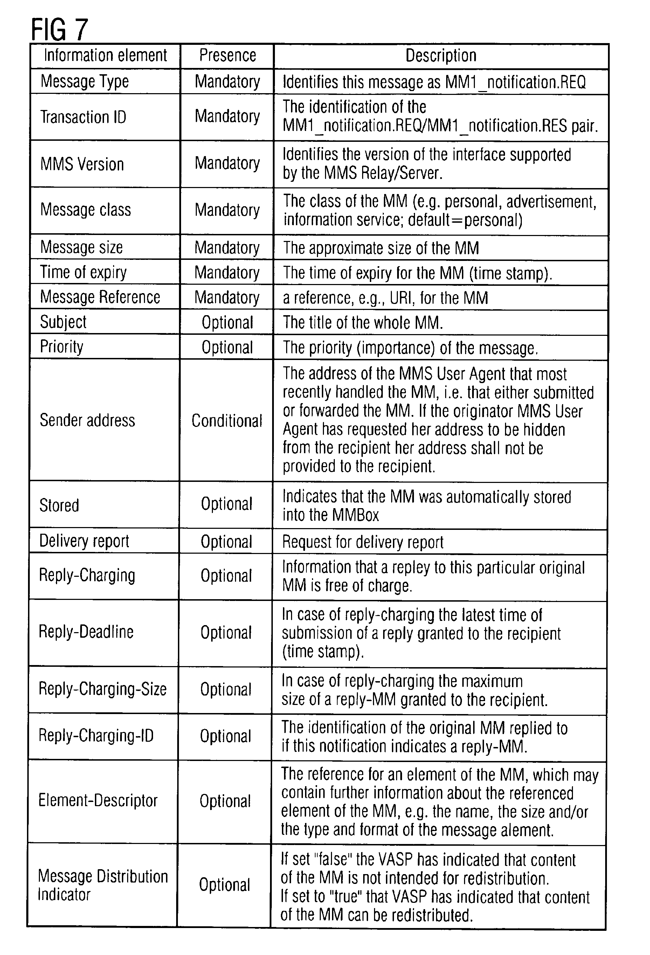

Figur 7 (Tabelle 1): 3GPP abstract message MM1_notification.REQ nach Stand der Technik;

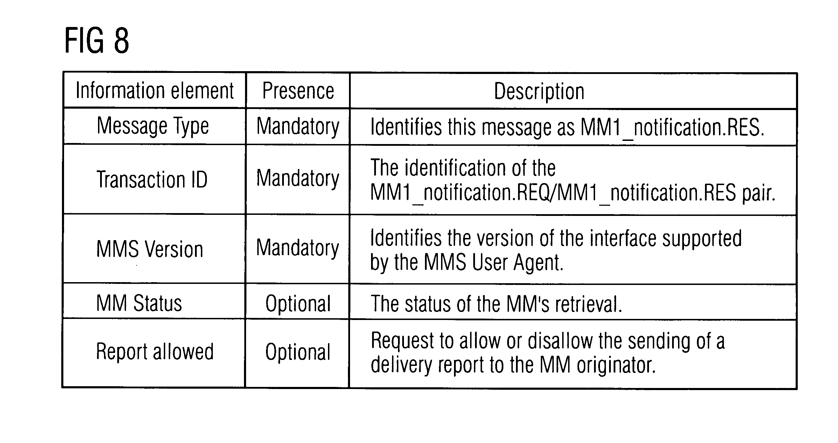

Figur 8 (Tabelle 2): 3GPP abstract message MM1_notification.RES nach Stand der Technik;

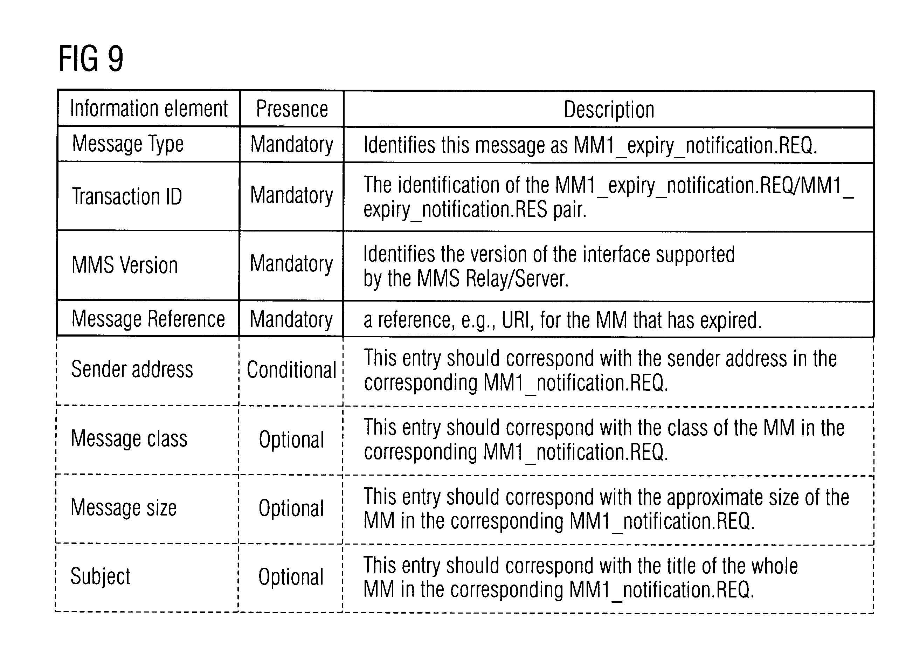

Figur 9 (Tabelle 3): neu definierte 3GPP abstract message MM1_expiry_notification.REQ;

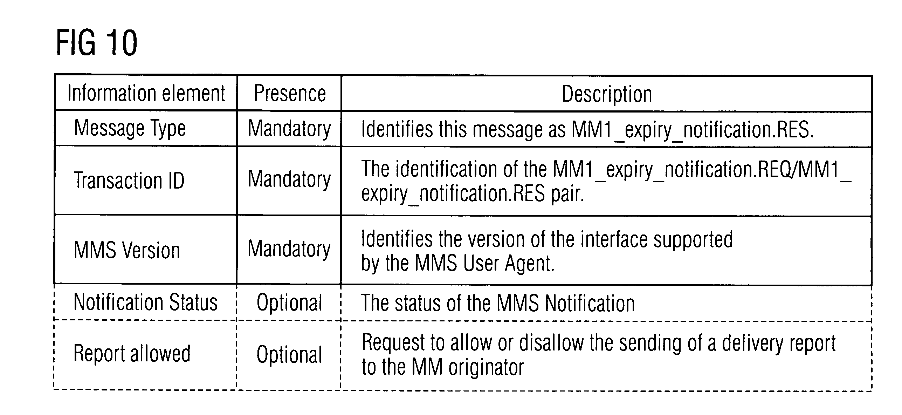

Figur 10 (Tabelle 4): neu definierte 3GPP abstract message MM1_expiry_notification.RES;

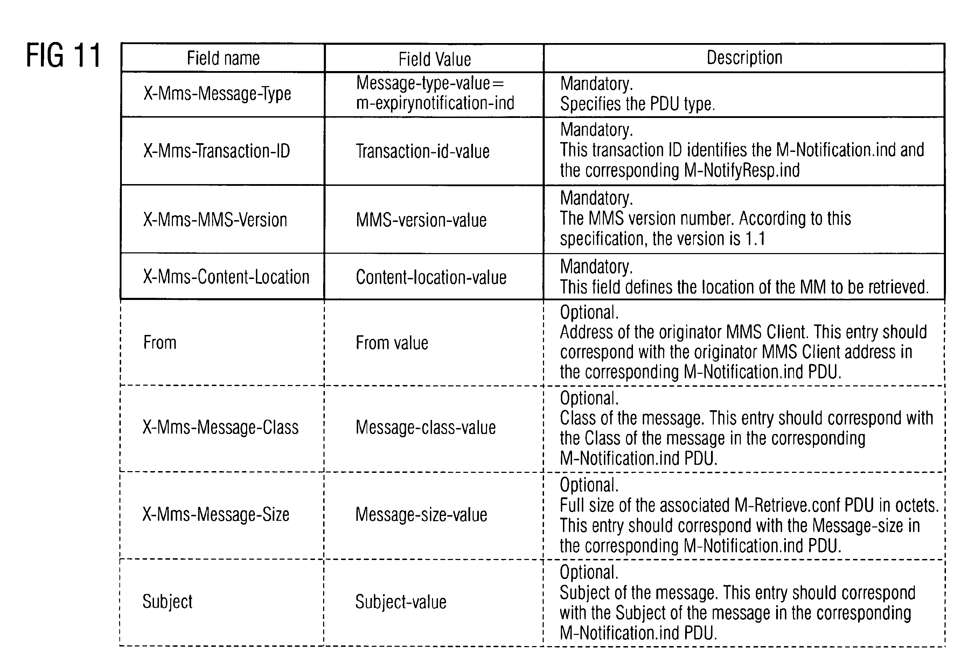

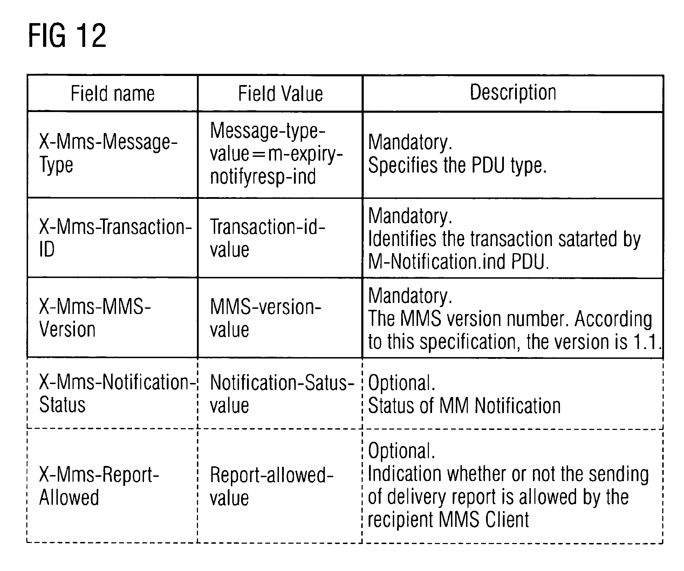

Figur 11 (Tabelle 5): neu definierte OMA MMS PDU M-ExpiryNotification.ind;Figur 12 (Tabelle 6): neu definierte OMA MMS PDU M-ExpiryNotifyResp.ind.

Es wird bei den weiteren beispielhaften Erläuterungen der Erfindung davon ausgegangen, dass der Informationsaustausch zwischen den beteiligten Instanzen für MMS - wie bereits oben erläutert - durch die in [3] definierten so genannten 3GPP abstract messages erfolgt. Eine abstract message enthält dabei mindestens ein information element.

Eine erste Lösungsvariante (Lösung 1) basiert auf einem wiederholten Aussenden der bereits existierenden MMS-Empfänger-Benachrichtigung (3GPP abstract message MM1_notification.REQ, vergl. Tabelle 1), wobei der Inhalt des in ihr enthaltene information element "time of expiry" entsprechend angepasst ist. Hierbei hat der MMS-Dienstleistungsanbieter die Möglichkeit, die noch verbleibende Gültigkeit dem Empfänger MMS User Agent B anzugeben und zwar idealerweise in Form eines relativen Zeitintervals. Tabelle 2 zeigt den Aufbau einer passenden Empfangsbestätigung (abstract message MM1_notification.RES) für die MMS-Empfänger-Benachrichtigung.

In einer Ausführungsvariante (Variante 1-A) ist dabei vorgesehen, dass der Eintrag für das information element "time of expiry" die noch verbleibende Zeit kodiert in Stunden, Minuten und Sekunden beinhaltet (z.B. "verbleibende Gültigkeitsdauer: 0h-2min-0sec"), wenn der MMS-Dienstleistungsanbieter beispielsweise eine Warnung ausgeben möchte.

In einer anderen Ausführungsvariante (Variante 1-B) ist vorgesehen, dass das information element "time of expiry" auch einen Null-Eintrag (z.B. "verbleibende Gültigkeitsdauer: 0h-0min-0sec") beinhaltet, wenn der Empfänger über das vom MMS-Dienstleistungsanbieter bereits ausgeführte Löschen einer MM informiert werden soll. Im diesem Fall (MM wurde bereits gelöscht) wird ein neu definierter Statuswert in der abstract message MM1_notification.RES entsprechend benützt (z.B: Status "notification deleted"). Ebenso kann eine Ausgestlatung vorsehen, dass der bereits für andere abstract messages (die aus Gründen der Übersichtlichkeit in Abbildung 3 nicht dargestellt sind) definierte Statuswert "expired" hier für die Rückmeldung (also in der abstract message MM1_notification.RES) zweckentfremdet eingesetzt wird.

Es wird also im MMS User Agent B des Empfängers ein Zusammenhang zwischen einer ersten empfangenen MMS-Empfänger-Benachrichtigung (d.h. der "MMS Notification", die nach dem Eintreffen einer neuen MM vom MMS Relay/Server B an das MMS User Agent B des Empfängers versendet wird) und mindestens einer weiteren empfangenen MMS-Empfänger-Benachrichtigung (d.h. einer "MMS Notification", die kurz vor dem oder beim Ablauf der Gültigkeit bzw. nach dem Löschen der MM vom MMS Relay/Server B an das MMS User Agent B des Empfängers versendet wird) hergestellt.

Den Zusammenhang kann das MMS User Agent B des Empfängers entweder auf Basis einer wiederholt verwendeten Transaction-ID und/oder anhand einer wiederholt verwendeten Message Reference erkennen (vergl. Tabelle 1). Besonders vorteilhaft ist im diesem Zusammenhang die Verwendung unterschiedlicher Signalisierungen: die erste MMS-Empfänger-Benachrichtigung könnte dem Empfänger beispielsweise "normal" angezeigt werden, während die mindestens eine weitere MMS-Empfänger-Benachrichtigung dem Empfänger mit einem anderen Klingelton möglicherweise in Kombination mit einem Warnhinweis angezeigt wird. Zur Bestimmung der Signalisierung kann bei Bedarf auch zusätzlich der Inhalt des information elements "time of expiry" herangezogen werden; dann könnte beispielsweise "verbleibende Gültigkeitsdauer: 0h-2min-0sec" anders signalisiert werden als "verbleibende Gültigkeitsdauer: 0h-0min-0sec".

Eine zweite Lösungsvariante (Lösung 2) basiert auf dem Aussenden einer abstract message, die beispielsweise MM1_expiry_notification.REQ (angelehnt an die 3GPP Terminologie) (zweite Notifikations-Nachricht) genannt wird und einen strukturellen Aufbau nach Tabelle 3 aufweist. Ein information element zur Angabe einer Gültigkeit ist in diesem Fall nicht erforderlich, da diese abstract message nur dann ausgesendet wird, wenn eine MM nicht mehr länger im MMSE B für den Empfänger MMS User Agent B zum Herunterladen bereitliegt. Um eine Rückmeldung vom Empfänger MMS User Agent B an den MMS Relay/Server B übertragen zu können, ist gemäß einer Ausführungsvariante die Definition einer passenden abstract message MM1_expiry_ notification.RES vorgesehen (Tabelle 4). Neben einem information element für die Transaktions-Identifikationsnummer (obligatorisch) kann sie auch ein information element für die Übertragung des Status der MMS-Empfänger-Benachrichtigung (optional) und ein weiteres information element für den Zustellreport Mechanismus (hier nicht weiter erläutert) in MMS enthalten. Die beiden abstract messages sind in den Tabellen 3 und 4 dargestellt.

Auch in diesem Fall stellt der MMS User Agent B des Empfängers einen Zusammenhang zwischen der MMS-Empfänger-Benachrichtigung ("MMS Notification") und der Benachrichtigung über den Ablauf der Gültigkeit einer MM ("MMS Expiry Notification") her, um auf dem Telekommunikations-Endgerät des Empfängers die richtige MMS-Empfänger-Benachrichtigung ("MMS Notification") ausfindig zu machen und idealerweise automatisch zu löschen. Da das hier neu definierte eigenständige abstract message Paar konform zu [2] durch eine individuelle Transaktions-Identifikationsnummer gekennzeichnet wird, kann das MMS User Agent B des Empfängers die Zusammengehörigkeit von MMS-Empfänger-Benachrichtigung (abstract message MM1_ notification.REQ) und Benachrichtigung über den Ablauf der Gültigkeit einer MM (abstract message MM1_expiry_notification.REQ) anhand einer wiederholt verwendeten Message Reference herausfinden. Zur Sicherheit können dazu natürlich zusätzlich auch noch andere information elements, wie z.B. "Subject" und/oder "Sender Address" und/oder "Message Size" und/oder "Message Class" und/oder eigens zu diesem Zweck definierte information elements, hinzugezogen werden. Analog zu den Erläuterungen am Ende von Lösung 1 ist auch in dem hier beschriebenen Fall eine unterschiedliche Signalisierung als besonders vorteilhaft.

Kombinationsmöglichkeiten: Selbstverständlich liegt auch eine vorteilhafte Kombination der Lösungsvarianten 1-A mit 1-B bzw. von 1-A mit 2, d.h. zunächst wird der Empfänger über das bevorstehende Ende der Gültigkeit einer MM gewarnt (1-A) und danach beim tatsächlichen Ablauf der Gültigkeit über das Löschen der MM auf dem MMS Relay/Server informiert (1-B oder 2), im Rahmend der Erfindung.

Im Folgenden wird die Umsetzung der Erfindung im Rahmen einer OMA-Implementierung von MMS näher beschrieben.

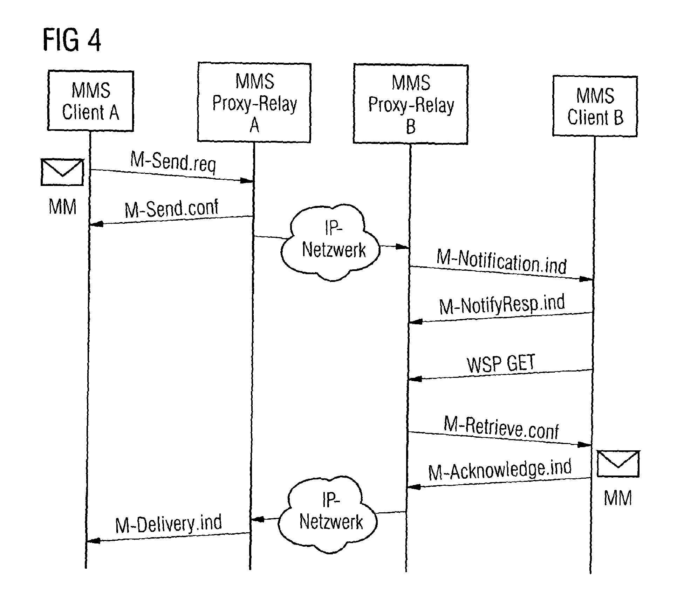

Die technischen Details für den speziellen Fall, daß es sich bei der Schnittstelle MM1 um eine Luftschnittstelle handelt, sind in den OMA (OMA - Open Mobile Alliance) Spezifikationen [4] [5] und [6] angegeben. Die OMA ist ein Standardisierungsgremium, das im Sommer 2002 aus dem WAP-Forum hervorgegangen ist. In ihm werden sowohl die alten WAP-Forum Spezifikationen gepflegt, als auch die Weiterentwicklung von MMS vorangetrieben. Das Transaction Flow Diagramm (Nachrichtenflußdiagramm) nach OMA ist in Figur 4 mit der dazugehörigen OMA-Terminologie für den Fall des PULL-Modus (die entsprechende OMA Terminologie lautet: "deferred retrieval") nach heutigem Stand der Technik gemäß [5] dargestellt. Die 3GPP-Begriffe MMS User Agent bzw. MMS Relay/Server existieren in OMA nicht, weshalb im Folgenden stellvertretend auch die Begriffe MMS Client bzw. MMS Proxy-Relay benutzt werden. Figur 4 zeigt den Austausch der OMA MMS PDUs (PDU - Protocol Data Unit) zwischen den vier beteiligten Instanzen MMS Client A, MMS Proxy-Relay A, MMS Proxy-Relay B und MMS Client B bei der Übertragung einer MM. Wie bereits erwähnt, liegt der OMA-Fokus auf der Luftschnittstelle (d.h. Schnittstelle MM1 in 3GPP-Terminologie), so daß auf die Verbindung zwischen zwei MMS Proxy-Relays an dieser Stelle nicht näher eingegangen wird.

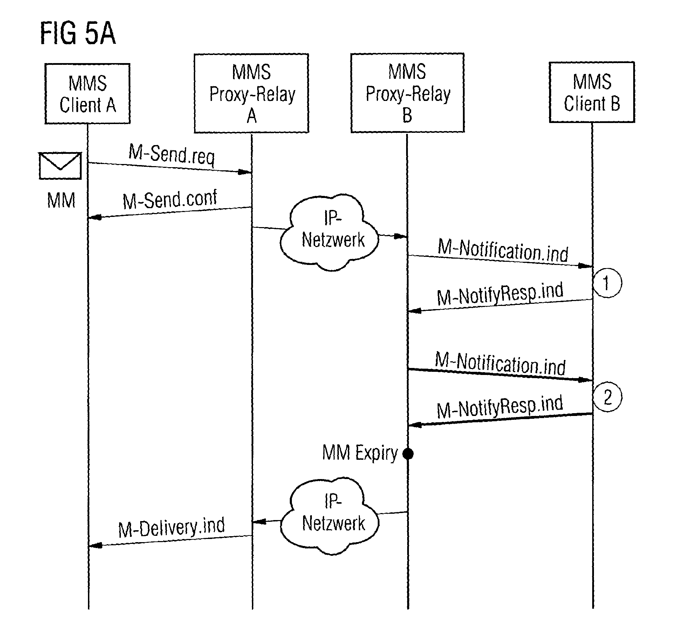

Die erweiterte Verwendung des OMA MMS PDU Paares M-Notification.ind und M-NotifyResp.ind nach Lösungsvariante 1-A (siehe oben) ist in Figur 5-A dargestellt. Die relevanten OMA MMS PDUs sind dabei in Fettdruck hervorgehoben dargestellt. Hier wird das OMA MMS PDU Paar M-Notification.ind und M-NotifyResp.ind eingesetzt, um den Empfänger MMS User Agent B über das bevorstehende Ende der Gültigkeit ("MM Expiry", symbolisiert durch den dicken Punkt in Figur 5-A) einer zum Herunterladen bereitliegenden MM zu informieren.

Wie bereits oben erläutert, kann der MMS Client B des Empfängers die Zusammengehörigkeit der beiden OMA MMS PDU Paare, jeweils bestehend aus M-Notification.ind und M-NötifyResp.ind (vergl. Referenzen 1 und 2 in Figur 5-A), beispielsweise anhand der gleichen Transaktions-Identifikationsnummer und/oder der gleichen Referenz auf den Speicherplatz der MM herausfinden. Ferner kann der MMS Client B des Empfängers bei Bedarf die in den beiden eintreffenden OMA MMS PDUs M-Notification.ind enthaltenen Werte für die Gültigkeit untersuchen und davon abhängig das Eintreffen der beiden OMA MMS PDUs M-Notification.ind unterschiedlich signalisieren.

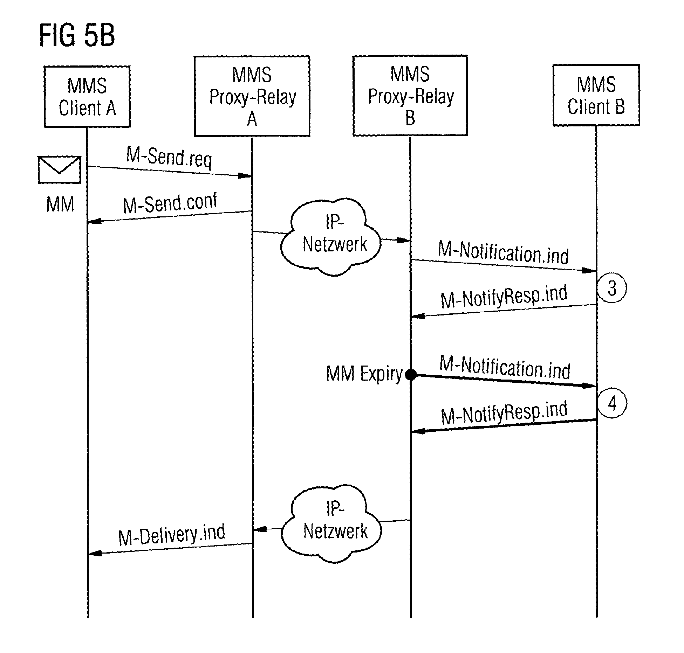

Die erweiterte Verwendung des OMA MMS PDU Paares M-Notification.ind und M-NotifyResp.ind nach Lösungsvariante 1-B ist in Figur 5-B dargestellt. Die relevanten OMA MMS PDUs sind auch hier wieder in Fettdruck hervorgehoben dargestellt. Das OMA MMS PDU Paar M-Notification.ind und M-NotifyResp.ind wird bei Ablauf der Gültigkeit ("MM Expiry", symbolisiert durch den dicken Punkt in Abbildung 5-B) dazu benutzt, den Empfänger MMS Client B über das erfolgte Löschen der bis zu diesem Zeitpunkt zum Herunterladen bereitliegenden MM in Kenntnis zu setzen. Das MMS Client B bietet in einem nächsten Schritt dem Benutzer die zuvor empfangene MMS-Empfänger-Benachrichtigung nicht mehr länger zur Auswahl an und sendet eine Statusmeldung (z.B.: "notification deleted") in der zweiten OMA MMS PDU M-NotifyResp.ind (Referenz 4 in Figur 5-B) zum MMS Proxy-Relay B zurück.

Analog zu den obigen Ausführungen kann auch hier der MMS Client B des Empfängers die Zusammengehörigkeit der beiden OMA MMS PDU Paare, jeweils bestehend aus M-Notification.ind und M-NotifyResp.ind (vergl. Referenzen 3 und 4 in Figur 5-B), beispielsweise anhand der gleichen Transaktions-Identifikationsnummer und/oder der gleichen Referenz auf den Speicherplatz der MM herausfinden. Auch hier kann der MMS Client B des Empfängers bei Bedarf wieder die in den beiden eintreffenden OMA MMS PDUs M-Notification.ind enthaltenen Werte für die Gültigkeit analysieren und davon abhängig das Eintreffen der beiden OMA MMS PDUs M-Notification.ind unterschiedlich signalisieren.

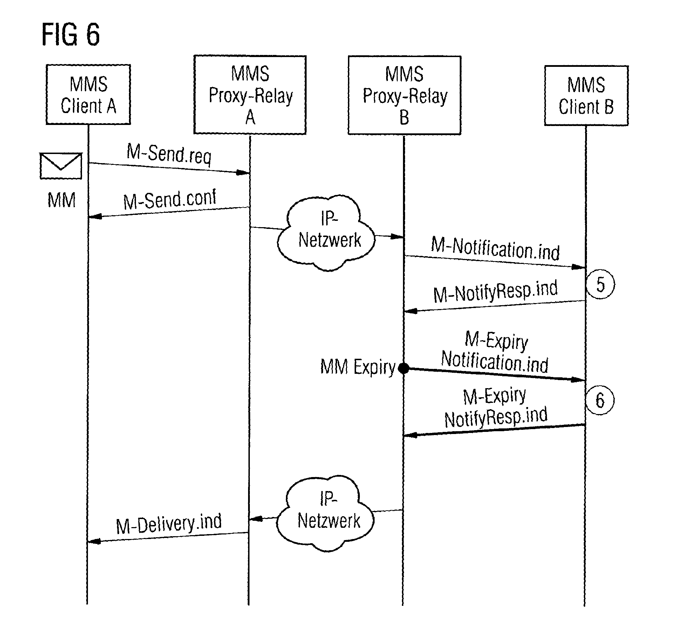

Figur 6 zeigt den Austausch neu definierter OMA MMS PDUs M-ExpiryNotification.ind und M-ExpiryNotifyResp.ind zwischen den vier beteiligten Instanzen nach Lösung 2 (hervorgehoben in Fettdruck, vergl. Referenz 6 in Abbildung 6). Die OMA MMS PDU M-ExpiryNotification.ind wird bei Ablauf der Gültigkeit ("MM Expiry", symbolisiert durch den dicken Punkt in Abbildung 6) dazu benutzt, den Empfänger MMS Client B über das erfolgte Löschen einer bis zu diesem Zeitpunkt zum Herunterladen bereitliegenden MM in Kenntnis zu setzen. In Analogie zur Lösungsvariante 1-B bietet der MMS Client B des Empfängers idealerweise dem Benutzer die zuvor empfangene MMS-Empfänger-Benachrichtigung nicht mehr länger zur Auswahl an und sendet stattdessen eine Statusmeldung (z.B: "notification deleted") in der OMA MMS PDU M-ExpiryNotifyResp.ind zum MMS Proxy-Relay B zurück.

Wie bereits weiter oben erwähnt, kann auch hier der MMS Client B des Empfängers die Zusammengehörigkeit der beiden OMA MMS PDUs Paare (vergl. Referenzen 5 und 6 in Figur 6), beispielsweise anhand der gleichen Transaktions-Identifikationsnummer und/oder der gleichen Referenz auf den Speicherplatz der MM herausfinden, wobei die zweite Möglichkeit (Verwendung der Referenz) insofern von Vorteil ist als dem neu definierten OMA MMS PDU Paar, bestehend aus M-ExpiryNotification.ind und M-ExpiryNotifyResp.ind (in Figur 6 hervorgehoben in Fettdruck, Referenz 6), in diesem Fall standardkonform eine eigene individuelle Transaktions-Identifikationsnummer zugewiesen werden kann. Auch hier kann der MMS Client B des Empfängers bei Bedarf wieder - diesmal allerdings abhängig von der Art der eintreffenden PDU (M-ExpiryNotification.ind oder M-Notification.ind) - eine unterschiedliche Art der Signalisierung wählen. Eine dritte Möglichkeit, die Zusammengehörigkeit herauszufinden, ist die Verwendung eines eigens zu diesem Zweck definierten Kopf-Feldes in der OMA MMS PDU M-ExpiryNotification.ind (Referenzen 6 in Figur 6), mit dem die erste OMA MMS PDU M-Notification.ind (Referenzen 5 in Figur 6) referenziert werden kann.

Die Tabellen 5 und 6 zeigen den Aufbau der beiden neu definierten OMA MMS PDUs M-ExpiryNotification.ind (4 obligatorische und 4 optionale Kopf-Felder) und M-ExpiryNotifyResp.ind (3 obligatorische und 2 optionale Kopf-Felder) gemäß Lösungsvariante 2. Ein Vergleich mit dem Aufbau der schon bekannten OMA MMS PDUs M-Notification.ind (7 obligatorische und 9 optionale Kopf-Felder) und M-NotifyResp.ind (4 obligatorische und 1 optionale Kopf-Felder) aus [4] zeigt, daß die Lösungsvariante 2 kleinere OMA MMS PDUs hervorbringt. Folglich ist auch das zu übertragene Datenvolumen geringer. Dies ist ein Vorteil der Lösung 2 gegenüber der Lösung 1-B.

Das neue Kopf-Feld für die Statusrückmeldung in der OMA MMS PDU M-ExpiryNotifyResp.ind vom MMS Client B des Empfängers zum MMS Proxy-Relay B ist in Tabelle 6 als optionales Kopf-Feld dargestellt ("X-Mms-Notification-Status"). Es zeigt dem MMS Dienstleistungsanbieter B des Empfängers beispielsweise mit dem Feld-Wert "notification deleted" an, daß die zugehörige MMS-Empfänger-Benachrichtigung (OMA MMS PDU M-Notification.ind, Referenz 5 in Figur 6) dem Benutzer nicht mehr länger zur Auswahl angeboten wird, weil sie nach Empfang der Benachrichtigung über den Ablauf der Gültigkeit einer MM (OMA MMS PDU M-ExpiryNotification.ind, Referenz 6 in Figur 6) im Telekommunikations-Endgerät des Empfängers - idealerweise automatisch - gelöscht wurde.

Es sei nochmals darauf hingewiesen, daß sowohl die Kombination von 1-A und 1-B, als auch die Kombination von 1-A und 2 möglich und vorteilhaft eingesetzt werden kann.

Neben den oben erläuterten Ausführungsvarianten der Erfindung liegt eine Vielzahl weiterer Ausführungsvarianten im Rahmen der Erfindung, von denen einige im Folgenden kurz angegeben werden, und die anhand der erläuterten Ausführungsbeispiele einfach in die Praxis umgesetzt werden können.
- die Nachricht enthält multimediale Inhalte.
- die Übertragung der zweiten Notifikations-Nachricht erfolgt als Warnung unmittelbar vor Ablauf der Gültigkeitsdauer.
- die Übertragung der zweiten Notifikations-Nachricht erfolgt beim netzwerkseitigen Löschen der Daten mit Ablauf der Gültigkeit geschieht.
- bei der Nachricht handelt es sich um Multimedia-Nachrichten (sogenannte "MMs") des Multimedia Messaging Service (MMS).
- die zweite Notifiaktionnachricht wird als MMS-Empfänger-Benachrichtigung ("MMS Notification") vom MMS Relay/Server an das MMS User Agent des Empfängers gesendet.
- die zweite Notifiaktionnachricht wird als eigens für diesen Zweck neu definierte Benachrichtigung ("MMS Expiry Notification") vom MMS Relay/Server an das MMS User Agent des Empfängers gesendet.
- die Zusammengehörigkeit der ersten MMS-Empfänger-Benachrichtigung (Notifikationsnachricht) und einer weiteren MMS-Empfänger-Benachrichtigung ("MMS Notification") (zweite Notifikationsnachricht) bzw. von einer ersten MMS-Empfänger-Benachrichtigung und einer neuen Benachrichtigung ("MMS Expiry Notification") wird vom MMS User Agent des Empfängers erkannt.
- die Zusammengehörigkeit wird durch eine Transaktions-Identifikationsnummer und/oder durch eine Referenz auf den Speicherplatz einer MM und/oder durch ein zur Verwendung in der neuen Benachrichtigung ("MMS Expiry Notification") definiertes Kopf-Feld, das eine Referenz auf die erste MMS-Empfänger-Benachrichtigung Benachrichtigung ("MMS Notification") enthält, angezeigt.
- der MMS User Agent des Empfängers signalisiert das Eintreffen mindestens einer weiteren MMS-Empfänger-Benachrichtigung ("MMS Notification") und/oder einer neuen Benachrichtigung ("MMS Expiry Notification") auf Basis der verwendeten Transaktions-Identifikationsnummern und/oder der Referenzen und/oder der angegebenen Werte für die Gültigkeit unterschiedlich.

In der Beschreibung wurde auf folgende Dokumente Bezug genommen:
[1] 3rd Generation Partnership Project (3GPP) TS 23.040 v6.0.1 (2002-09),
   Technical Specification Group Terminals,
   Technical realization of the Short Message Service (SMS)
[2] 3rd Generation Partnership Project (3GPP) TS 22.140 v6.0.0 (2002-12),
   Technical Specification Group Services and System Aspects,
   Multimedia Mesaging Service (MMS), Stage 1
[3] 3rd Generation Partnership Project (3GPP) TS 23.140 v6.0.0 (2002-12),
   Technical Specification Group Terminals,
   Multimedia Mesaging Service (MMS), Functional Description, Stage2
[4] OMA-WAP-MMS-ENC-v1_1-20021030-C,
   Multimedia Messaging Service, Encapsulation Protocol, Version 1.1
   "candidate state" version 30-10-2002
[5] OMA-WAP-MMS-CTR-v1_1-20021031-C,
   Multimedia Messaging Service, Client Transaction, Version 1.1
   "candidate state" version 31-10-2002
[6] OMA-WAP-MMS-ARCH-v1_1-20021101-C,
   Multimedia Messaging Service, Architecture Overview, Version 1.1
   "candidate state" version 01-11-2002

## Patentansprüche

1. Verfahren zum Bereithalten einer Nachricht für einen Empfänger,
bei dem dem Empfänger mittels einer ersten Notifikations-Nachricht signalisiert wird, dass eine Nachricht für den Empfänger bereitgehalten wird,
bei dem die erste Notifikations-Nachricht ein Informationselement enthält, das insbesondere eine erste Nachrichten-Gültigkeitsdauer beschreibt,
bei dem der Empfänger mittels einer zweiten Notifikations-Nachricht über das Erlöschen der bereitgehaltenen Nachricht informiert wird.

2. Verfahren nach Anspruch 1,
bei dem dem Empfänger mittels der zweiten Notifikations-Nachricht signalisiert wird, dass die bereitgehaltene Nachricht erloschen ist.

3. Verfahren nach Anspruch 1,
bei dem dem Empfänger mittels der zweiten Notifikations-Nachricht signalisiert wird, dass die bereitgehaltene Nachricht weiter bereitgehalten wird.

4. Verfahren nach Anspruch 3,
bei dem die zweite Notifikations-Nachricht ein Informationselement enthält, das eine, insbesondere korrigierte, Nachrichten-Gültigkeitsdauer beschreibt.

5. Verfahren nach einem der Ansprüche 2 bis 4,
bei dem der Aufbau der zweiten Notifikations-Nachricht dem Aufbau der ersten Notifikations-Nachricht entspricht.

6. Empfänger, der zur Durchführung eines Verfahrens nach einem der vorhergehenden Ansprüche eingerichtet ist.

7. Servereinrichtung, die zur Durchführung eines Verfahrens nach einem der Ansprüche 1 bis 6 eingerichtet ist.

8. Kommunikationssystem, das zur Durchführung eines Verfahrens nach einem der Ansprüche 1 bis 6 eingerichtet ist.
